# EUROPÄISCHE PATENTSCHRIFT

(11) **EP 2 775 131 B1**
(45) Veröffentlichungstag und Bekanntmachung des Hinweises auf die Patenterteilung: **16.11.2016**
(21) Anmeldenummer: 14157750.2
(22) Anmeldetag: 05.03.2014
(51) Int. Cl.: F02C 7/045, F02M 35/12, F04D 25/02, F04D 29/42, F04D 29/66, F04D 29/70

(54) **Schalldämpfer eines Abgasturboladers**
Silencer for an exhaust gas turbocharger
Amortisseur acoustique d'un turbocompresseur à gaz d'échappement

(30) Priorität: 06.03.2013 DE 102013203827
(43) Veröffentlichungstag der Anmeldung: 10.09.2014
(73) Patentinhaber: ABB Turbo Systems AG, 5400 Baden (CH)
(72) Erfinder: Feld, Heinz-Jürgen, 5524 Niederwil (CH); Mrvelj, Ilija, 8005 Zürich (CH); Meyer, Philipp, 8704 Herrliberg (CH)
(74) Vertreter: ABB Patent Attorneys

(56) Entgegenhaltungen:
- WO-A2-2011/048323
- JP-A- 2002 004 964

## Beschreibung

### TECHNISCHES GEBIET

Die Erfindung bezieht sich auf das Gebiet der aufgeladenen Brennkraftmaschinen.

Sie betrifft einen Schalldämpfer auf der Ansaugseite des Verdichters eines Abgasturboladers zum Aufladen einer derartigen Brennkraftmaschine sowie ein Abgasturbolader mit einem derartigen Schalldämpfer.

### STAND DER TECHNIK

Schalldämpfer dieser Art werden typischerweise eingesetzt auf der Ansaugseite des Verdichters eines Abgasturboladers. Im Verdichter wird Verbrennungsluft komprimiert, welche anschliessend den Brennkammern eines Verbrennungsmotors zugeführt wird. Angetrieben wird der Verdichter von der Abgasturbine des Abgasturboladers. Oftmals werden Schalldämpfer zusätzlich mit einem Filter versehen. In diesem Fall wird in der Regel von einem Filterschalldämpfer gesprochen.

Der Verdichtereintritt eines Turboladers erzeugt Lärm, welcher sich im Wesentlichen aus sogenannten Schaufelpassierfrequenzen (Drehzahl multipliziert mit der Anzahl der Laufschaufeln des Verdichterrades, auch "blade pass frequency" genannt) und einem mittelfrequenten Rauschen zusammensetzt.

Zur Dämpfung dieses Lärms werden Ansaugschalldämpfer eingesetzt. Die Aufgaben dieser Schalldämpfer sind, den Lärm in bestimmten Frequenzbereichen zu dämpfen und die Strömung im gewünschten Strömungsprofil dem Verdichter zuzuführen.

Hohe zu dämpfende Frequenzen verlangen entweder kleine Spalte zwischen den Dämpfungselementen oder Umlenkungen, um ein Durchstrahlen zu verhindern. Die etwas tieferen Frequenzen brauchen, um wirkungsvoll gedämpft werden zu können, dickere Absorptionsdicken.

Die bisher bekannten Schalldämpfer sind daher entweder mit einer Vielzahl eingeschobener Dämpfungselemente ausgeführt, die zur Verhinderung des Durchstrahleffektes gekrümmt sein können oder weisen eine wandbündige Auskleidung und eine oder mehrere Umlenkungen auf.

So beschreibt etwa EP 0574605 A1 einen Filterschalldämpfer, der aus einem gegossenen Monoblock besteht, und in dessen strahlenförmigen Rippen mit Nuten die Dämpfungselemente angeordnet sind. Ein Filterrahmen, bestehend aus einem abnehmbaren Lochblechteil, umgibt den Schalldämpfer in der Art, dass die Dämpfungselemente gegen radiales Herausfallen gesichert werden. Der Lochblechteil ist mittels Verbindungselementen ringförmig um den Schalldämpfer angeordnet. Ein scheibenförmiges Dämpfungselement besteht aus vier Dämpfungssegmenten, die zusammengesetzt eine Ringfläche darstellen. Ein Absorptionselement wird von zwei gestanzten Lochblechen gehalten, und bildet so ein Dämpfungssegment, das in die Nuten der oben erwähnten Rippen des gegossenen Monoblocks radial eingeführt wird.

EP 0740080 A2 beschreibt einen kreiszylinderförmigen Filterschalldämpfer, bei dem die Dämpfungselemente mit deren Dämpfungsflächen parallel zu der Zentralachse des ebenfalls als Monoblock gegossenen Filterschalldämpfergehäuses in Nuten der Gehäusewände angeordnet sind. Die Dämpfungselemente bestehen aus einem Dämpfungsblech, das ein Absorptionselement ummantelt. Die Dämpfungsbleche bilden mit den an ihnen angeordneten Grobfiltersegmenten im montierten Zustand am Umfang des Filterschalldämpfers einen Grobfilterring aus, der von einem ringförmigen Filter umgeben ist.

JP 2002-4964 beschreibt einen Filterschalldämpfer mit einer Vielzahl koaxial ineinander angeordneter, zylinderförmiger Dämpfungselemente welche in axialer Richtung durchströmt werden und welche zur Verhinderung des Durchstrahleffekts wellenförmig ausgebildet sind. Auf der eintrittsseitigen axialen Stirnseite ist ein Filterelement angeordnet.

KR 2008-8664 beschreibt einen Filterschalldämpfer mit einer Vielzahl koaxial ineinander angeordneter, konischen Dämpfungselemente welche schräg zur axialen Richtung durchströmt werden. ausgerichteter Strömungskanäle. Die Dämpfungselemente werden von einem senkrecht zur Strömungsrichtung verlaufenden Halteblech gehalten. Auf der eintrittsseitigen Stirnseite ist ein Filterelement angeordnet.

WO 2011/048323 beschreibt eine mehrlagige, schallabsorbierende Matte, welche direkt auf den Schallerzeugenden Maschinenteil aufgebracht wird. Die Matte umfasst mehrere Schichten mit einer Vielzahl verlaufender Löcher.

### KURZE DARSTELLUNG DER ERFINDUNG

Die Aufgabe der Erfindung besteht darin, einen Schalldämpfer auf der Ansaugseite des Verdichters eines Abgasturboladers mit einer möglichst kompakten, leichten und kostengünstigen Bauform zu schaffen, bei welchem die anzusaugende Luft beim Durchströmen des Schalldämpfers einen geringen Widerstand zu überwinden hat.

Die Aufgabe wird erfindungsgemäss mit einem Schalldämpfer gelöst, welcher ein rohrförmiges Schalldämpfergehäuse umfasst, wobei das Schalldämpfergehäuse einen Strömungskanal zwischen einer stirnseitigen Eintrittsöffnung und einer rückseitigen Austrittsöffnung ummantelt. Die Strömungsrichtung durch den Schalldämpfer ist als die Richtung vom Mittelpunkt der Eintrittsöffnung zum Mittelpunkt der Austrittsöffnung festgelegt. Im Schalldämpfergehäuse ist ein Halteblech zum Positionieren von Dämpfungsmittel in Strömungsrichtung angeordnet. Erfindungsgemäss umfassen die Dämpfungsmittel einen in Strömungsrichtung in das Schalldämpfergehäuse einschiebbaren Dämpfungskörper, welcher in Strömungsrichtung perforiert ist, also eine Vielzahl in Strömungsrichtung verlaufender Öffnungen (hiernach auch als Löcher bezeichnet) aufweist. Der Dämpfungskörper ist in mehrere, in Strömungsrichtung hintereinander angeordnete Dämpfungsmatten unterteilt.

Optional weist der Schalldämpfer Positionierungsmittel auf, welche die Winkellage des Dämpfungskörper bezüglich des Schalldämpfergehäuses senkrecht zur Strömungsrichtung bestimmen, so dass der Dämpfungskörper innerhalb des Schalldämpfergehäuses die vorgesehene Position einnimmt und insbesondere bei der Montage oder im Betrieb nicht von dieser Lage abweicht.

Sind mehrere Dämpfungsmatten vorhanden, weist der Schalldämpfer optional Positionierungsmittel auf, welche die Lage der Dämpfungsmatten bezüglich ihrer Perforation relativ zueinander bestimmen, so dass die einzelnen Dämpfungsmatten in Strömungsrichtung korrekt hintereinander angeordnet sind, so dass eine einwandfreie Durchströmung der mehreren Dämpfungsmatten-schichten gewährleistet ist.

Die genannten Positionierungsmittel umfassen beispielsweise einen am Halteblech und/ oder am Schalldämpfergehäuse befestigten Stift sowie ein dafür vorgesehenes Positionierungsloch im Dämpfungskörper beziehungsweise in den Dämpfungsmatten.

Die Löcher der Perforation des Dämpfungskörpers weisen optional voneinander abweichende Querschnitte auf, wobei optional die Löcher im Dämpfungskörper im Randbereich des Strömungskanals grössere oder kleinere Querschnitte aufweisen als Löcher im Dämpfungskörper im Zentrum des Strömungskanals.

Optional sind die Löcher im Dämpfungskörper so ausgebildet und/ oder angeordnet, dass die Löcher eine über den Radius gemittelte, offene Lochfläche bilden, welche über den Winkel eine Gleichverteilung aufweist. Dadurch können kleinere Schalldämpfer bei gleichbleibender Gesamtlochfläche gefertigt werden, als bei einer Anordnung der Löcher gemäss der dichtesten Packung, bei welcher gleichmässig verteilte und gleich ausgebildeten, kreisrunden Löcher jeweils im gleichen Abstand im 60° Winkel voneinander entfernt angeordnet sind. Die aus der Anordnung gemäss der dichtesten Packung resultierende Symmetrie im 60° Zyklus sowie die Ungleichverteilung der über den Radius gemittelten, geöffneten Lockfläche pro Winkel kann zu einer Schaufelerregung der 6. Ordnung führen. Insbesondere hat sich gezeigt, dass eine Ungleichverteilung der über den Radius gemittelten, offenen Lochfläche über den Winkel dazu führen kann, dass über den Winkel unterschiedlich viel Medium angesaugt wird, was zur oben genannten, ungewollten Anregung der Laufschaufeln des Verdichterrades führen kann.

Optional weist mindestens eines der Löcher der Perforation des Dämpfungskörpers einen in Strömungsrichtung inkonstanten Querschnitt auf.

Optional verläuft mindestens eines der Löcher der Perforation des Dämpfungskörpers derart von der Strömungsrichtung abweichend, dass Ein- und Austrittsöffnung dieses Lochs in Strömungsrichtung keine Überlappung aufweisen.

Der Dämpfungskörper und das Schalldämpfergehäuse weisen im Bereich des Dämpfungskörpers vorteilhafterweise einen kreisrunden, ovalen oder polygonalen Querschnitt auf.

Vorteilhafterweise weist das Schalldämpfergehäuse im Bereich des Dämpfungskörpers eine Querschnittsfläche auf, die grösser ist als die Fläche der Austrittsöffnung des Schalldämpfergehäuses .

Vorteilhafterweise entspricht die Summe aller Eintrittsöffnungen der Perforation im Dämpfungskörper mindestens der Fläche der Austrittsöffnung des Schalldämpfergehäuses.

Vorteilhafterweise wird der Dämpfungskörper in Strömungsrichtung beidseitig von jeweils einem perforierten Halteblech gehalten.

Optional ist der Schalldämpfer als Filterschalldämpfer ausgebildet, indem im Bereich der Eintrittsöffnung des Schalldämpfergehäuses ein Filter quer zum Strömungskanal angeordnet ist.

### KURZE BESCHREIBUNG DER ZEICHNUNGEN

Die Erfindung wird nachfolgend anhand von Zeichnungen näher erläutert. Hierbei zeigt:
- Fig1: eine schematische Darstellung eines Abgasturboladers mit einem dem Verdichter vorgeschalteten Schalldämpfer gemäss dem Stand der Technik, wobei Ein- und Austritt des Abgases sowie der Frischluft mit Pfeilen angedeutet ist,
- Fig. 2: einen isometrische Darstellung eines erfindungsgemäss ausgebildeten Schalldämpfers, wobei der aus mehreren Dämpfungsmatten zusammengesetzte Dämpfungskörper des Schalldämpfers teilweise aufgeschnitten und das Gehäuse des Schalldämpfers teilweise durchsichtig dargestellt ist,

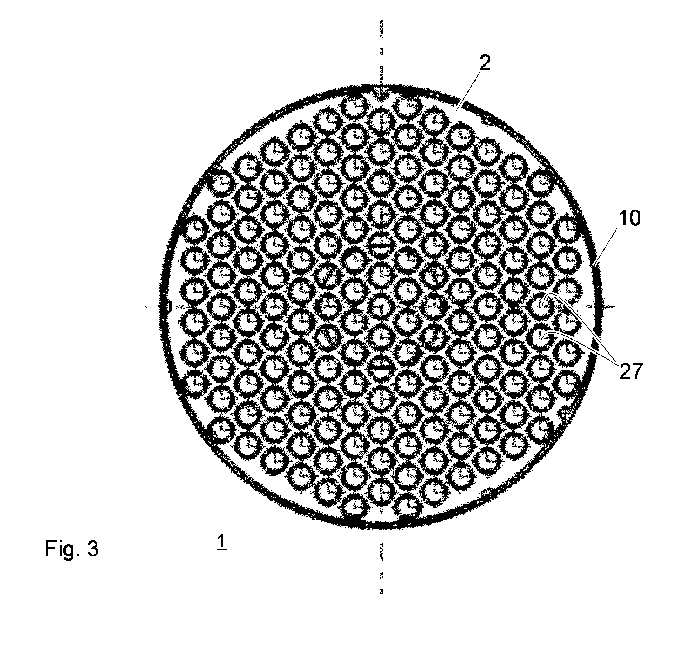

- Fig.3: ein Ansicht in Strömungsrichtung F auf die Eintrittsöffnung des Schalldämpfers nach Fig. 2

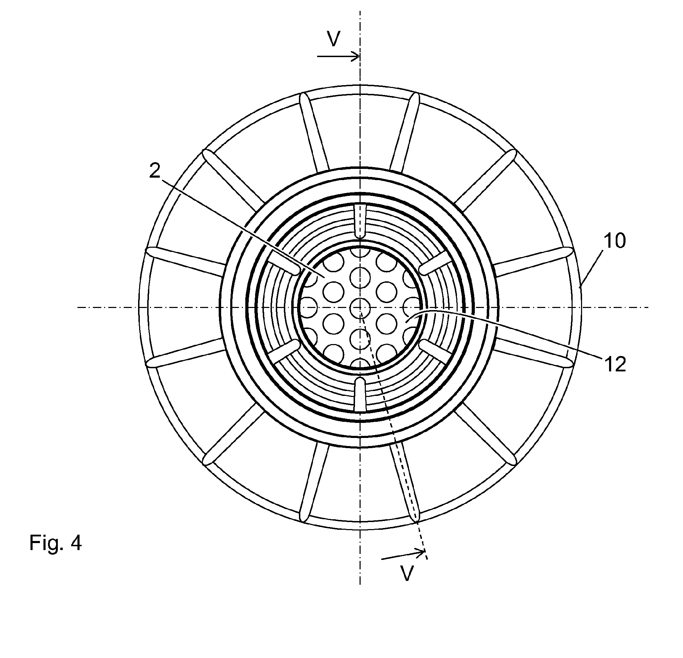

- Fig. 4: eine Ansicht entgegen der Strömungsrichtung F auf die mit der Austrittsöffnung versehene Rückseite des Schalldämpfers nach Fig. 2

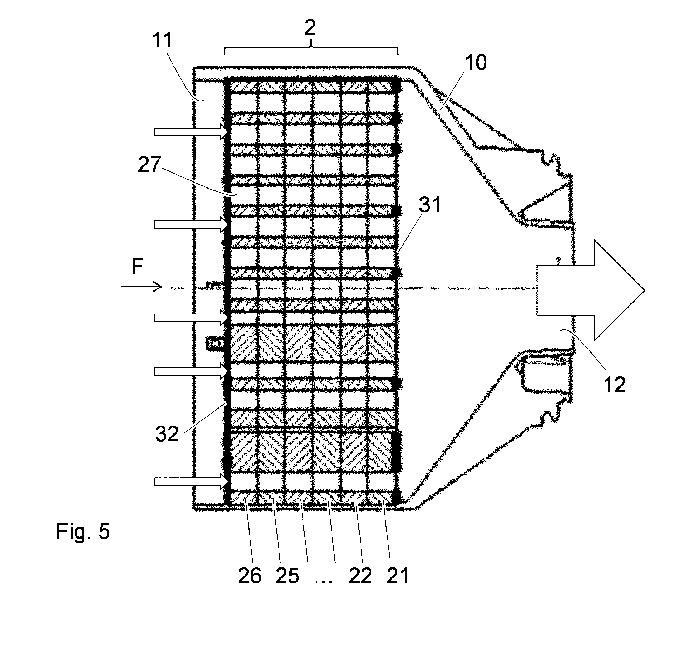

- Fig. 5: einen entlang V-V und in Strömungsrichtung F geführten Schnitt durch den Schalldämpfer nach Fig. 4,

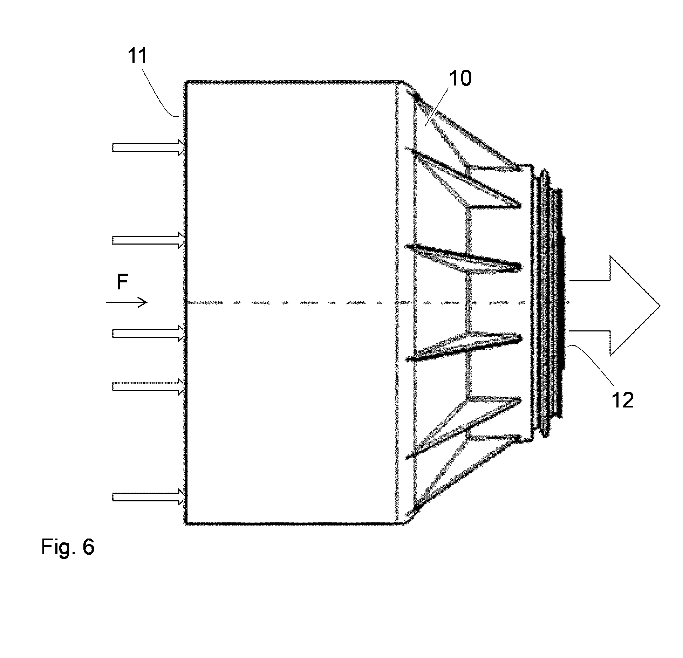

- Fig. 6: eine Ansicht von der Seite auf den Schalldämpfer nach Fig. 2,
- Fig. 7 und 8: optionale Ausführungsformen des Dämpfungskörpers des Schalldämpfers nach Fig. 2, und
- Fig. 9: eine Ansicht in Strömungsrichtung auf die Eintrittsöffnung einer optionalen Ausführungsform des Schalldämpfers gemäss Fig. 2, wobei Fig. 9a einen Ausschnitt eines Lochmusters gemäss der dichtesten Packung zeigt und Fig. 9b die erfindungsgemässe Lochverteilung darstellt.

### WEG ZUR AUSFÜHRUNG DER ERFINDUNG

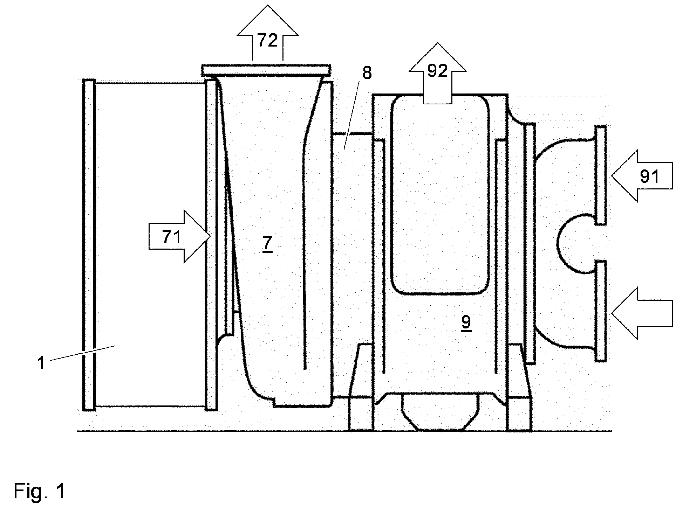

Wie eingangs erwähnt, werden Schalldämpfer dieser Art typischerweise auf der Ansaugseite des Verdichters eines Abgasturboladers eingesetzt. Fig. 1 zeigt schematisch eine derartige Anwendung. Im Verdichter 7 wird über den Filterschalldämpfer 1 angesaugte Frischluft komprimiert. Der mit 71 bezeichnete Pfeil bezeichnet den Lufteintritt des Verdichters. Die komprimierte Luft wird anschliessend über den Luftaustritt 72 den Brennkammern des Verbrennungsmotors zugeführt. Das nicht dargestellte Verdichterrad im Innern des Verdichtergehäuses wird durch das ebenfalls nicht dargestellte Turbinenrad angetrieben. Das Turbinenrad wird mit heissen Abgasen aus den Brennkammern eines Verbrennungsmotors beaufschlagt, welche über den Gaseintritt 91 in das Turbinengehäuse geführt werden. Stromab des Turbinenrades wird das Abgas über den Gasaustritt 92 der Auspuffanlage des zugeführt.

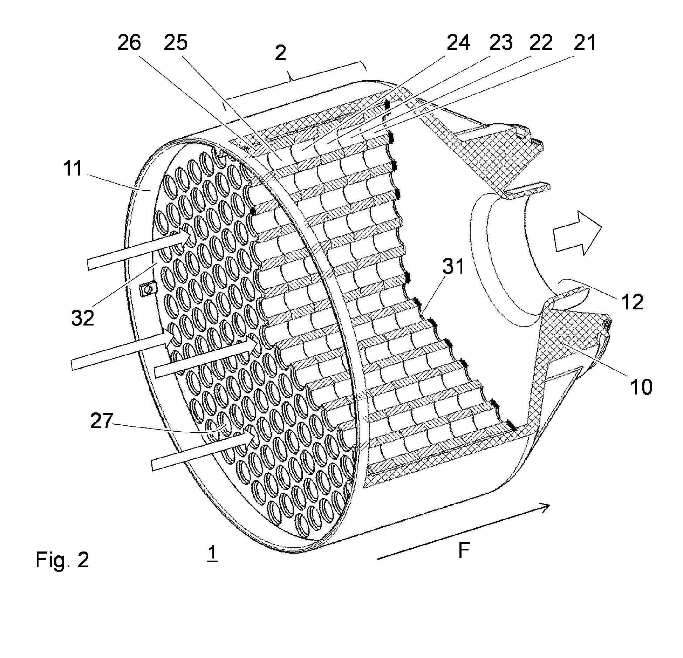

Fig. 2 zeigt eine isometrische Darstellung des erfindungsgemäss ausgebildeten Schalldämpfers. Mit den Pfeilen ist die Frischluftströmung angedeutet. Das rohrförmige Gehäuse 10 des Schalldämpfers weist eine Eintrittsöffnung 11 und eine Austrittsöffnung 12 auf, wobei die beiden Öffnungen auf gegenüberliegenden Stirnseite des rohrförmigen Gehäuses angeordnet sind, wodurch sich im Betrieb eine Durchströmung in Rohrrichtung (in der dargestellten Ausführungsform mit kreisrundem Querschnitt entspricht dies der axialen Richtung) ergibt. Aufgrund des Verzichts auf eine Umlenkung der Strömung wird ein geringerer Druckverlust als bei herkömmlichen Schalldämpfern mit radialer Anströmung erreicht.

Vorteilhafterweise wird das Schalldämpfergehäuse als einteiliges Gussgehäuse realisiert.

Im Bereich der Eintrittsöffnung 11 kann optional der bereits oben erwähnte Filter angeordnet sein, welcher verhindert, dass im Betrieb mit dem Luftstrom grössere Objekte in den Verdichter und die Brennkammern des Verbrennungsmotors gelangen. Auf der Seite der Austrittsöffnung weist der Schalldämpfer typischerweise Befestigungsmittel auf, mit denen der Schalldämpfer und das Verdichtergehäuse verbunden werden können. Beispielsweise umlaufende Vorsprünge oder Befestigungsöffnungen zum Einbringen von Schrauben. Dabei kann das Gehäuse des Schalldämpfers an einer oder mehreren Stellen am Verdichtergehäuse aufliegen und/ oder befestigt sein.

Der Schalldämpfer umfasst erfindungsgemäss einen Dämpfungskörper 2, welcher sich in der dargestellten Ausführungsform aus mehreren Dämpfungsmatten 21, ..., 26 zusammensetzt. Die dargestellte Anzahl Matten ist beispielhaft, es können auch mehr oder weniger als sechs Matten sein, welche den Dämpfungskörper bilden.

Der Dämpfungskörper 2 ist in Strömungsrichtung perforiert, weist also eine Vielzahl von lochförmiger Öffnungen 27 auf. Das Absorbermaterial ist demnach derart geformt, dass es sowohl die Kanäle als auch die schallabsorbierenden Wände bildet.

Der einteilige Dämpfungskörper wird vorteilhafterweise in die gewünschte Form geschäumt, während die Dämpfungsmatten mitsamt Perforation kostengünstig aus Platten von Dämpfungsmaterial gestanzt werden können.

Der Dämpfungskörper 2 wird erfindungsgemäss in Strömungsrichtung in das Schalldämpfergehäuse 10 eingesetzt, also bei einem runden Gehäusequerschnitt in Richtung der Zentralachse. Dabei kann der Dämpfungskörper durch die Eintrittsöffnung 11 eingeschoben werden, oder, etwa bei einem zweiteiligen Schalldämpfergehäuse, auch von der entgegengesetzten Richtung.

Gehalten wird der Dämpfungskörper in axialer Richtung mittels eines perforierten Halteblechs 31, wobei das Halteblech sich über den gesamten Rohrquerschnitt erstrecken, oder nur Teile davon abdecken kann. Die Perforation kann dabei mit der Perforation des Dämpfungskörpers übereinstimmen, oder auch grobmaschiger sein, indem ein Loch in dem Halteblech sich über mehrere Löcher im Dämpfungskörper erstreckt. Ein derartiges Halteblech kann beidseits des Dämpfungskörpers vorgesehen sein, also auf der stromabwärtigen Seite zur Austrittsöffnung hin sowie auf der Eintrittsseite. Eintrittsseitig kann das Halteblech mit dem Filter kombiniert sein, so dass der über die Eintrittsöffnung gespannte Filter die Haltefunktion des Dämpfungskörpers übernimmt.

Das Schalldämpfergehäuse 10 weist im Bereich des Dämpfungskörpers 2 einen grösseren Querschnitt auf als stromabwärts im Bereich der Austrittsöffnung. Das Gehäuse verjüngt sich demnach nach dem Schalldämpfer zum Verdichtereintritt hin, um die Strömung dem Verdichterrad zuzuführen.

Der Lochquerschnitt der Perforation, die Form, die Stegdicke und die Gesamtlänge des Dämpfungskörpers in Strömungsrichtung sind so gewählt, dass die notwendige Dämpfung erreicht wird. Die Anzahl und Form der Löcher sowie der Gesamtquerschnitt aller Löcher sind entsprechend dem Volumenstrom und dem erlaubten Druckverlust gewählt.

Vorteilhafterweise entspricht die Summe aller Eintrittsöffnungen der Perforation im Dämpfungskörper mindestens der Fläche der Austrittsöffnung des Schalldämpfergehäuses.

Optional können die Löcher im Dämpfungskörper unregelmässig verteilt sein und/ oder unterschiedlich geformte und/ oder unterschiedlich grosse Querschnitte aufweisen. So kann es aufgrund der unterschiedlichen Schallpegelverteilung über den Querschnitt unter Umständen vorteilhaft sein, wenn die Löcher im äusseren Bereich eine grössere Querschnittsfläche aufweisen als die Löcher im zentralen, inneren Teil des Dämpfungskörpers. Es sind aber auch Schallpegelverteilungen denkbar, bei welchen die äusseren Löcher vorteilhafterweise einen kleinere Querschnittsfläche aufweisen als die inneren Löcher.

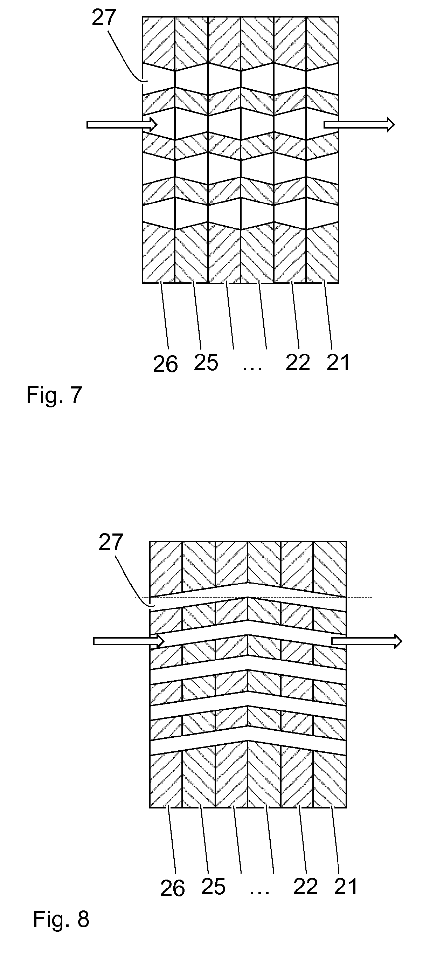

Optional können die Löcher im Dämpfungskörper einen in Strömungsrichtung inkonstanten Querschnitt aufweisen. Die Löcher können etwa in Strömungsrichtung konvergierend verlaufen. Wird der Dämpfungskörper durch mehrere Dämpfungsmatten gebildet können die Löcher, wie in Fig. 7 schematisch dargestellt, von Matte zu Matte unterschiedliche Querschnittsflächen aufweisen, wodurch sich die Absorptionsfläche erhöhen lässt.

Optional können die Löcher im Dämpfungskörper, wie in Fig. 8 schematisch dargestellt, derart von der Strömungsrichtung abweichend verlaufen, dass Ein- und Austrittsöffnung dieses Lochs in Strömungsrichtung keine Durchsicht ermöglichen. Dabei können die jeweiligen Löcher gekrümmt oder mit einem Knick versehen sein.

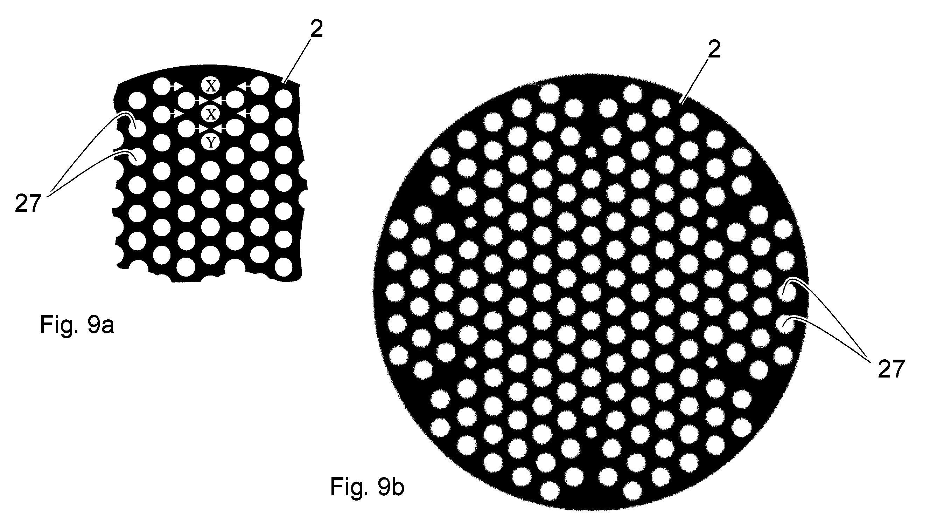

Eine weitere Variante die Löcher im Dämpfungskörper anzuordnen ist in Fig. 9b schematisch dargestellt. Ausgangspunkt dieser Variante ist die Lochanordnung der dichtesten Packung gemäss dem Ausschnitt in Fig. 9a, bei welcher die kreisrunden Löcher jeweils im gleichen Abstand im 60°-Winkel voneinander entfernt sind. Mit dieser Anordnung kann über den gesamten Querschnitt ein möglichst grosser Ansaugquerschnitt (Lochanteil) gewährleisten und der Schalldämpfer trotzdem klein gehalten werden. Die erfindungsgemässe Anordnung der Löcher im Dämpfungskörper gemäss der Variante nach Fig. 9b löst die Problematik, dass bei der Lochanordnung der dichtesten Packung eine Symmetrie im 60°-Winkel herrscht und andererseits die über den Radius gemittelte geöffnete Lochfläche - also dem Anteil der Lochfläche auf einem radial geführten, vom Zentrum des Dämpfungskörpers ausgehenden Strahl - pro Winkel variiert. Diese Variation der Lochflächenverteilung in Kombination mit der Symmetrie im 60° Zyklus kann eine Anregung der 6. Ordnung der Verdichterschaufeln hinter dem Schalldämpfer generieren. Die 6-fach Anregung kommt aus der Ungleichverteilung der zugeströmten Luft, oder des zugeströmten Mediums über den Winkel. Es zeigt sich nämlich, dass durch die Lochanordnung über den Winkel unterschiedlich viel Medium angesaugt wird und dies zum Teil sehr erheblich.

Bei der erfindungsgemässen Lochanordnung gemäss der Fig. 9b wird primär darauf geachtet, dass die über den Radius gemittelte offene Schalldämpferfläche - also der Anteil der Lochfläche auf einem radial geführten, vom Zentrum des Dämpfungskörpers ausgehenden Strahl - pro Winkel möglichst konstant wird. Ausgehend von der oben beschriebenen, dichtesten Packung der Lochanordnung nach Fig. 9a werden Löcher gestrichen um die angesaugte Luft winkelbezogen gleichmässiger über den Querschnitt zu verteilen. Dies betrifft infolgedessen immer die Löcher, welche im radialen Sinn am nächsten zusammenstehen. Die Löcher werden vom äusseren Rand her nach innen gestrichen, wobei die Anzahl der Streichung durch die Grösse des Schalldämpfers bestimmt wird. Die Streichung vermindert die Anregung extrem, wobei mit kleinen kosmetischen Nachkorrekturen die Anregungen fast komplett getilgt werden kann. Die kosmetischen Nachkorrekturen beinhalten beispielsweise das Zusammenrücken der Löcher neben den gestrichenen Löchern. In der Ausführungsform nach Fig. 9b wurden ausgehend von der dichtesten Packung die in Fig. 9a mit X und Y bezeichneten drei Löcher von aussen gestrichen, während die jeweiligen Nachbarlöcher etwas zusammengerückt wurden, wie mit den Pfeilen angedeutet ist. Das mit Y bezeichnete, dritte Loch wurde mit einem kleineren Durchmesser wieder eingefügt. Wird nun vom Zentrum des Dämpfungskörpers ein radial geführter Strahl betrachtet, ergibt sich für jede Winkellage des Strahls ein Lochflächenanteil, welcher erfindungsgemäss einen im wesentlichen konstanten Wert aufweist.

Der dargestellte Schalldämpfer weist eine kreisrunde Querschnittsform mit einer zentralen Achse auf. Es ist jedoch auch vorstellbar, dass die Querschnittsform des Schalldämpfergehäuses teilweise oder über die gesamte Länge von der kreisrunden Form abweicht. So könnte etwa der Bereich der Eintrittsöffnung und des Dämpfungskörpers oval, rechteckig oder ganz allgemein polygonförmig ausgebildet sein.

### BEZEICHNUNGSLISTE

- 1: Schalldämpfer
- 10: Schalldämpfergehäuse
- 11: Eintrittsöffnung
- 12: Austrittsöffnung
- 2: Dämpfungskörper
- 21-26: Dämpfungsmatten
- 27: Löcher, Perforation
- 31, 32: perforiertes Halteblech
- 7: Verdichter
- 71: Lufteintritt des Verdichters
- 72: Luftaustritt des Verdichters
- 8: Lagergehäuse
- 9: Abgasturbine
- 91: Gaseintritt der Abgasturbine
- 92: Gasaustritt der Abgasturbine
- F: Strömungsrichtung

## Patentansprüche

1. Schalldämpfer (1) auf der Ansaugseite eines Verdichters eines Abgasturboladers, umfassend ein rohrförmiges Schalldämpfergehäuse (10), welches einen Strömungskanal zwischen einer stirnseitigen Eintrittsöffnung (11) und einer rückseitigen Austrittsöffnung (12) ummantelt, wobei die Strömung durch den Schalldämpfer vom Mittelpunkt der Eintrittsöffnung zum Mittelpunkt der Austrittsöffnung gerichtet ist (F), **dadurch gekennzeichnet, dass** die Dämpfungsmittel einen in Strömungsrichtung in das Schalldämpfergehäuse einschiebbaren Dämpfungskörper (2, 21, ..., 26) umfassen, welcher in Strömungsrichtung perforiert ist, also eine Vielzahl in Strömungsrichtung verlaufender Löcher (27) aufweist und in mehrere, in Strömungsrichtung (F) hintereinander angeordnete Dämpfungsmatten (21, ..., 26) unterteilt ist.

2. Schalldämpfer nach Anspruch 1, wobei Positionierungsmittel die Winkellage des Dämpfungskörper (2) bezüglich des Schalldämpfergehäuses (10) senkrecht zur Strömungsrichtung (F) bestimmen.

3. Schalldämpfer nach Anspruch 1, wobei Positionierungsmittel die Lage der Dämpfungsmatten (21, ..., 26) bezüglich ihrer Perforation relativ zueinander bestimmen.

4. Schalldämpfer nach einem der Ansprüche 2 oder 3, wobei die Positionierungsmittel einen an einem Halteblech zum Halten des Dämpfungskörpers im Schalldämpfergehäuse und/ oder am Schalldämpfergehäuse befestigten Stift sowie ein dafür vorgesehenes Positionierungsloch im Dämpfungskörper beziehungsweise in den Dämpfungsmatten umfassen.

5. Schalldämpfer nach einem der vorangehenden Ansprüche, wobei die Löcher (27) im Dämpfungskörper voneinander abweichende Querschnitte aufweisen.

6. Schalldämpfer nach Anspruch 5, wobei Löcher im Dämpfungskörper im Randbereich des Strömungskanals grössere Querschnitte aufweisen als Löcher im Dämpfungskörper im Zentrum des Strömungskanals.

7. Schalldämpfer nach Anspruch 5, wobei Löcher im Dämpfungskörper im Randbereich des Strömungskanals kleinere Querschnitte aufweisen als Löcher im Dämpfungskörper im Zentrum des Strömungskanals.

8. Schalldämpfer nach einem der vorangehenden Ansprüche, wobei die Löcher (27) im Dämpfungskörper so angeordnet werden und/ oder voneinander abweichende Querschnittsflächen aufweisen, dass der über einen vom Zentrum des Strömungskanals ausgehenden, radial geführten Strahl summierte Lochflächenanteil unabhängig vom Winkel des Strahls einen konstanten Wert aufweist.

9. Schalldämpfer nach einem der vorangehenden Ansprüche, wobei mindestens eines der Löcher im Dämpfungskörper einen in Strömungsrichtung inkonstanten Querschnitt aufweist.

10. Schalldämpfer nach einem der vorangehenden Ansprüche, wobei mindestens eines der Löcher derart von der Strömungsrichtung abweichend verläuft, dass Ein- und Austrittsöffnung dieses Lochs in Strömungsrichtung keine Durchsicht aufweisen.

11. Schalldämpfer nach einem der vorangehenden Ansprüche, wobei der Dämpfungskörper und das Schalldämpfergehäuse im Bereich des Dämpfungskörpers einen kreisrunden, ovalen oder polygonalen Querschnitt aufweisen.

12. Schalldämpfer nach einem der vorangehenden Ansprüche, wobei das Schalldämpfergehäuse im Bereich des Dämpfungskörpers eine Querschnittsfläche aufweist, die grösser ist als die Fläche der Austrittsöffnung des Schalldämpfergehäuses .

13. Schalldämpfer nach einem der vorangehenden Ansprüche, wobei der Dämpfungskörper durch mindestens ein perforiertes Halteblech (31, 32) im Schalldämpfergehäuse gehalten wird.

14. Schalldämpfer nach einem der vorangehenden Ansprüche, wobei das Schalldämpfergehäuse einen Filter aufweist.

15. Abgasturbolader, umfassend einen Schalldämpfer nach einem der vorangehenden Ansprüche.

## Claims

1. Sound attenuator (1) on the intake side of a compressor of an exhaust-gas turbocharger, comprising a tubular sound attenuator housing (10) which encases a flow duct between a face-side inlet opening (11) and a rear-side outlet opening (12), wherein the flow through the sound attenuator is directed (F) from the central point of the inlet opening to the central point of the outlet opening, **characterized in that** the attenuation means comprise an attenuation body (2, 21,..., 26) which can be inserted into the sound attenuator housing in the flow direction and which is perforated in the flow direction, that is to say has a multiplicity of holes (27) extending in the flow direction, and which is divided into a plurality of attenuation mats (21,..., 26) arranged one behind the other in the flow direction (F).

2. Sound attenuator according to Claim 1, wherein positioning means define the angular position of the attenuation body (2) with respect to the sound attenuator housing (10) perpendicular to the flow direction (F).

3. Sound attenuator according to Claim 1, wherein positioning means define the position of the attenuation mats (21,..., 26) relative to one another with regard to their perforation.

4. Sound attenuator according to either of Claims 2 and 3, wherein the positioning means comprise a pin, which is fastened to a holding plate for holding the attenuation body in the sound attenuator housing and/or to the sound attenuator housing, and a positioning hole, provided for said pin, in the attenuation body or in the attenuation mats.

5. Sound attenuator according to one of the preceding claims, wherein the holes (27) in the attenuation body have different cross sections than one another.

6. Sound attenuator according to Claim 5, wherein holes in the attenuation body in the edge region of the flow duct have larger cross sections than holes in the attenuation body in the center of the flow duct.

7. Sound attenuator according to Claim 5, wherein holes in the attenuation body in the edge region of the flow duct have smaller cross sections than holes in the attenuation body in the center of the flow duct.

8. Sound attenuator according to one of the preceding claims, wherein the holes (27) in the attenuation body are arranged, and/or have cross-sectional areas that differ from one another, such that the hole area fraction summed up over the length of a radial line extending from the center of the flow duct has a constant value regardless of the angle of the line.

9. Sound attenuator according to one of the preceding claims, wherein at least one of the holes in the attenuation body has a cross section which is non-constant in the flow direction.

10. Sound attenuator according to one of the preceding claims, wherein at least one of the holes extends in a manner deviating from the flow direction such that there is no line of sight through the inlet opening and outlet opening of said hole in the flow direction.

11. Sound attenuator according to one of the preceding claims, wherein the attenuation body and the sound attenuator housing have a circular, oval or polygonal cross section in the region of the attenuation body.

12. Sound attenuator according to one of the preceding claims, wherein the sound attenuator housing has, in the region of the attenuation body, a cross-sectional area larger than the area of the outlet opening of the sound attenuator housing.

13. Sound attenuator according to one of the preceding claims, wherein the attenuation body is held in the sound attenuator housing by at least one perforated holding plate (31, 32).

14. Sound attenuator according to one of the preceding claims, wherein the sound attenuator housing has a filter.

15. Exhaust-gas turbocharger comprising a sound attenuator according to one of the preceding claims.

## Revendications

1. Amortisseur acoustique (1) sur le côté aspiration d'un compresseur d'un turbocompresseur à gaz d'échappement, comprenant un boîtier d'amortisseur acoustique de forme tubulaire (10) qui enveloppe un canal d'écoulement entre une ouverture d'entrée du côté frontal (11) et une ouverture de sortie du côté arrière (12), l'écoulement étant orienté (F) à travers l'amortisseur acoustique depuis le centre de l'ouverture d'entrée jusqu'au centre de l'ouverture de sortie, **caractérisé en ce que** les moyens d'amortissement comprennent un corps d'amortissement (2, 21, ..., 26) pouvant être introduit dans une direction d'écoulement dans le boîtier de l'amortisseur acoustique, lequel corps d'amortissement est perforé dans la direction d'écoulement, c'est-à-dire présente une pluralité de trous (27) s'étendant dans la direction d'écoulement et est divisé en plusieurs nappes d'amortissement (21,..., 26) disposées les unes derrière les autres dans la direction d'écoulement (F) .

2. Amortisseur acoustique selon la revendication 1, dans lequel des moyens de positionnement définissent la position angulaire du corps d'amortissement (2) par rapport au boîtier d'amortisseur acoustique (10) perpendiculairement à la direction d'écoulement (F).

3. Amortisseur acoustique selon la revendication 1, dans lequel des moyens de positionnement définissent la position des nappes d'amortissement (21, ..., 26) par rapport à leur perforation les unes par rapport aux autres.

4. Amortisseur acoustique selon l'une quelconque des revendications 2 ou 3, dans lequel les moyens de positionnement comprennent une goupille fixée à une tôle de fixation pour retenir le corps d'amortissement dans le boîtier d'amortisseur acoustique et/ou sur le boîtier d'amortisseur acoustique ainsi qu'un trou de positionnement prévu à cet effet dans le corps d'amortissement, respectivement dans les nappes d'amortissement.

5. Amortisseur acoustique selon l'une quelconque des revendications précédentes, dans lequel les trous (27) présentent des sections transversales s'écartant les unes des autres dans le corps d'amortissement.

6. Amortisseur acoustique selon la revendication 5, dans lequel des trous dans le corps d'amortissement dans la région du bord du canal d'écoulement présentent des sections transversales plus grandes que des trous dans le corps d'amortissement au centre du canal d'écoulement.

7. Amortisseur acoustique selon la revendication 5, dans lequel des trous dans le corps d'amortissement dans la région du bord du canal d'écoulement présentent des sections transversales plus petites que des trous dans le corps d'amortissement au centre du canal d'écoulement.

8. Amortisseur acoustique selon l'une quelconque des revendications précédentes, dans lequel les trous (27) dans le corps d'amortissement sont disposés de telle sorte et/ou présentent des surfaces en section transversale s'écartant les unes des autres de telle sorte que la proportion des surfaces perforées additionnées sur un rayon guidé radialement partant du centre du canal d'écoulement présente une valeur constante indépendamment de l'angle du rayon.

9. Amortisseur acoustique selon l'une quelconque des revendications précédentes, dans lequel au moins l'un des trous présente dans le corps d'amortissement une section transversale non constante dans la direction d'écoulement.

10. Amortisseur acoustique selon l'une quelconque des revendications précédentes, dans lequel au moins l'un des trous s'étend de manière à s'écarter de la direction d'écoulement de telle sorte qu'une ouverture d'entrée et une ouverture de sortie de ce trou dans la direction d'écoulement ne permettent pas de voir à travers.

11. Amortisseur acoustique selon l'une quelconque des revendications précédentes, dans lequel le corps d'amortissement et le boîtier d'amortisseur acoustique présentent dans la région du corps d'amortissement une section transversale circulaire ronde, ovale ou polygonale.

12. Amortisseur acoustique selon l'une quelconque des revendications précédentes, dans lequel le boîtier d'amortisseur acoustique présente une surface en section transversale dans la région du corps d'amortissement qui est plus grande que la surface de l'ouverture de sortie du boîtier d'amortisseur acoustique.

13. Amortisseur acoustique selon l'une quelconque des revendications précédentes, dans lequel le corps d'amortissement est retenu par au moins une tôle de fixation perforée (31, 32) dans le boîtier d'amortisseur acoustique.

14. Amortisseur acoustique selon l'une quelconque des revendications précédentes, dans lequel le boîtier d'amortisseur acoustique présente un filtre.

15. Turbocompresseur à gaz d'échappement comprenant un amortisseur acoustique selon l'une quelconque des revendications précédentes.
